# EUROPEAN PATENT APPLICATION

(11) **EP 4 764 934 A1**
(43) Date of publication of application: **24.06.2026**
(21) Application number: 25864561.3
(22) Date of filing: 19.09.2025
(51) Int. Cl.: G06F 30/20, G06F 30/17, G06F 111/06

(54) **SIMULATION DEVICE AND METHOD THEREFOR**

(30) Priority: 02.10.2024 KR 20240134071
(71) Applicant: LG Energy Solution, Ltd., Seoul 07335 (KR)
(72) Inventor: LIM, Si Hyoun, Daejeon 34122 (KR); SEO, Tai Joon, Daejeon 34122 (KR)
(74) Representative: Plasseraud IP
(86) International application number: PCT/KR2025/014682
(87) International publication number: WO 2026/075406

(57) **Abstract**

A simulation device according to an embodiment disclosed herein includes an interface configured to acquire data related to a battery cell and at least one processor, and the at least one processor is configured to identify a first length from a first point on a first surface of a first portion including an electrode of the battery cell to a second point where a tab protrudes onto the first surface, identify a height from the first surface to a second portion to be coupled with the first portion, identify a second length from a third point where the tab extending from the second point protrudes onto a second surface of the second portion to a fourth point on the second surface where an end of the tab is to be positioned, and identify an entire length of the tab based on at least one of the first length, the height, the second length, or any combination thereof.

## Description

### TECHNICAL FIELD

### Cross-reference to Related Applications

This application claims priority from Korean Patent Application No. 10-2024-0134071, filed on October 2, 2024, the disclosure of which is incorporated by reference herein.

### Technical Field

Embodiments disclosed herein relate to a simulation device and a method thereof.

### BACKGROUND ART

Drawing automation (or automatic drawing generation system) is a technology that automatically generates, modifies, and manages design drawings in various industries, and may be mainly implemented through Computer-Aided Design (CAD) systems. This may play a significant role in reducing repetitive manual tasks performed by users, saving time and costs, and minimizing design errors. At least one of the techniques for drawing automation may include parametric design. Parametric design may refer to a method of defining design elements as variables, and automatically updating the entire design when the defined variables are adjusted. For example, when the size or shape of a part is changed, the drawing may be automatically modified while its relationship to other parts is maintained. That is, drawing automation is emerging as an important technology that significantly improves productivity and quality in battery design.

### DISCLOSURE OF THE INVENTION

### TECHNICAL PROBLEM

One object of the embodiments disclosed herein is to provide a simulation device for generating a simulation image by identifying a length of a tab for coupling a can and a cap assembly of a battery cell and a method thereof.

The technical problems of the embodiments disclosed herein are not limited to those mentioned above, and other objectives not mentioned will be clearly understood by those skilled in the art from the following descriptions.

### TECHNICAL SOLUTION

One object of the embodiments disclosed herein is to provide a simulation device for generating a simulation image by identifying a length of a tab for coupling a can and a cap assembly of a battery cell and a method thereof.

The technical problems of the embodiments disclosed herein are not limited to those mentioned above, and other objectives not mentioned will be clearly understood by those skilled in the art from the following descriptions.

### ADVANTAGEOUS EFFECTS

A simulation device and a method thereof according to the embodiments disclosed herein can generate a simulation image by identifying a length of a tab for coupling a can and a cap assembly of a battery cell.

Besides, various effects may be provided that are directly or indirectly identified through the present disclosure.

### BRIEF DESCRIPTION OF THE DRAWINGS

FIG. 1 is a block diagram illustrating a configuration of a simulation device according to an embodiment disclosed herein.
FIG. 2 illustrates an example of a simulation image acquired by a simulation device according to an embodiment disclosed herein.
FIG. 3 illustrates an example of an operation of identifying an entire length of a tab by a simulation device according to an embodiment disclosed herein.
FIG. 4 is an exemplary flowchart showing operations of a simulation device according to an embodiment disclosed herein.
FIG. 5 illustrates a computing system that executes a simulation method according to an embodiment disclosed herein.

### MODE FOR CARRYING OUT THE INVENTION

Hereinafter, various embodiments disclosed in the present disclosure will be described with reference to the accompanying drawings. However, this is not intended to limit the present invention to the specific embodiments, and it is to be construed to include various modifications, equivalents, and/or alternatives of embodiments of the present invention.

Herein, it is to be understood that a singular form of a noun corresponding to an item may include one or more of the things, unless the relevant context clearly indicates otherwise. As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively," as "coupled to," "coupled to," "connected with," or "connected to" another element (e.g., a second element), it means that the element may be coupled to the other element directly (e.g., by wire), wirelessly, or via a third element.

Each of the components described herein (e.g., a module or program) may contain a single entity or a plurality of entities. According to various embodiments, one or more of the components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As used herein, the term "module" or "unit" may include a unit implemented in hardware, software, or firmware, and may interchangeably be used with other terms, such as "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) or an application including one or more instructions that are stored in a storage medium (e.g., a memory) that is readable by a machine. For example, a processor of the machine may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

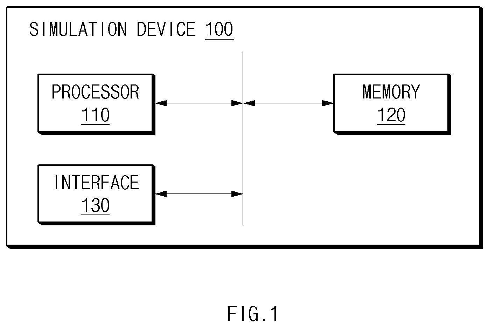

FIG. 1 is a block diagram illustrating a configuration of a simulation device according to an embodiment disclosed herein. The operation of a simulation device 100 (or a processor 110) below may be performed by the battery management system (BMS) related to a battery, as well as by various devices such as a server, a cloud, a charger, or a charger/discharger.

The simulation device 100 according to an embodiment may include at least one of the processor 110, a memory 120, or an interface 130. The processor 110, the memory 120, and the interface 130 may be electronically and/or operably coupled with each other by electronic components including a communication bus. Hereinafter, "hardware components being operatively coupled" may mean that a direct connection, or an indirect connection, is established between the hardware components, either by wire or wireless, such that a second hardware component is controlled by a first hardware component among the hardware components. Although illustrated based on different blocks, the embodiment is not limited thereto, and some of the hardware of FIG. 1 (e.g., at least a portion of the processor 110, the memory 120, and communication circuitry (not illustrated)) may be included in a single integrated circuit such as a system on a chip (SoC). Communication methods between components may include a bus, a general-purpose input and output (GPIO), a serial peripheral interface (SPI), and a mobile industry processor interface (MIPI).

The processor 110 of the simulation device 100 according to an embodiment may include a hardware component for processing data based on one or more instructions. Hardware components for processing data may include, for example, an arithmetic and logic unit (ALU), a floating point unit (FPU), a field programmable gate array (FPGA), a central processing unit (CPU), a micro controller unit (MCU), and/or an application processor (AP). One or more processors 110 may be provided. For example, the processor 110 may have a multi-core processor structure including a dual core, a quad core, a hexa core, or an octa core.

The memory 120 of the simulation device 100 according to an embodiment may include a hardware component for storing data and/or instructions input and/or output to the processor 110. The memory 120 may include, for example, a volatile memory such as a random-access memory (RAM) and/or a non-volatile memory such as a read-only memory (ROM). For example, the volatile memory may include at least one of a dynamic RAM (DRAM), a static RAM (SRAM), a cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, and an embedded multimedia card (eMMC). For example, the memory 120 may be configured to store data about the battery cell.

The interface 130 of the simulation device 100 according to an embodiment may be configured to generate measurement values for the battery cell. To this end, the interface 130 may include an image sensor for acquiring an image representing the battery cells, a measuring means such as a voltmeter, an ammeter, a thermometer, and/or a communication module for establishing a connection with an external device (e.g., a server).

The simulation device 100 according to an embodiment may obtain data related to the battery cell through the interface 130. For example, the data related to the battery cell may include information about a positive electrode, a negative electrode, or a separator included in the battery cell. The data related to the battery cell may include information indicating the size of the battery cell.

The simulation device 100 according to an embodiment may identify, in a simulation environment, a first portion including an electrode of the battery cell and a second portion different from the first portion. The battery cell may include a cylindrical battery cell.

For example, the first portion (e.g., a can of the battery cell) may include an electrode assembly of the battery cell. The electrode assembly may include a positive electrode, a negative electrode, and a separator. The electrode assembly may be defined as a structure based on a jelly roll in which the separator is interposed between the positive electrode and the negative electrode. The positive electrode may include a tab (e.g., a positive electrode tab). A negative electrode tab based on the negative electrode may be attached to a lower portion of the first portion (e.g., a portion positioned in a direction opposite to a direction from the first portion to the second portion).

For example, the simulation device 100 may connect the first portion and the second portion based on the length of the tab based on the positive electrode (e.g., the positive electrode tab).

For example, the second portion may represent a cap assembly. The cap assembly may include a cap forming a positive electrode terminal, a positive temperature coefficient element (PTC) for interrupting current depending on temperature, a safety vent (or current interrupt device (CID) short circuit member) for interrupting current depending on pressure, an insulating member, and/or a cap plate to which the tab is connected.

For example, the simulation device 100 may identify an entire length of the tab based on the positive electrode within the first portion for coupling with at least a portion of the second portion. The simulation device 100 may identify the entire length of the tab for coupling the first portion with the second portion in a virtual environment.

The simulation device 100 according to an embodiment may identify a first length from a first point on a first surface of the first portion to a second point where the tab (e.g., the positive electrode tab) protrudes on the first surface.

For example, the first point may represent a center point of the jelly roll included in the first portion.

The simulation device 100 according to an embodiment may identify a height from the first surface to the second portion to be coupled with the first portion.

The simulation device 100 according to an embodiment may identify a second length from a third point where the tab extending from a second point protrudes onto a second surface of the second portion to a fourth point on the second surface where an end of the tab is to be positioned.

The simulation device 100 according to an embodiment may identify the entire length of the tab based on at least one of the first length, the height, the second length, or any combination thereof.

In an embodiment, the simulation device 100 may determine a curvature at which at least a portion of the tab connecting the first portion to the second portion is bent by using at least one of the first length, the height, the second length, or any combination thereof.

For example, the simulation device 100 may identify the entire length of the tab using a sub-length corresponding to the curvature.

The simulation device 100 according to an embodiment may identify a maximum length at which at least a portion of the tab accesses a sub-portion of the second portion, and may identify a second length less than the maximum length.

For example, the maximum length may represent a distance at which a tab is accessible to another part within the sub-portion. For example, since interference between parts may occur when the tab accesses another part, the simulation device 100 may set the second length less than the maximum length.

The simulation device 100 according to an embodiment may identify a minimum length for fixing the end of the tab on the second surface, and may identify the second length exceeding the minimum length.

For example, the minimum length may represent a length for securing an area for fixing the end of the tab on the second surface. For example, the simulation device 100 may set the second length to be greater than the minimum length and less than the maximum length.

The simulation device 100 according to an embodiment as described above may set the entire length of the tab for coupling the first portion (e.g., the can) with the second portion (e.g., the cap assembly) of the battery cell in the virtual environment. For example, the simulation device 100 may provide a three-dimensional image representing the battery cell in which the first portion and the second portion are coupled by setting the entire length of the tab. The simulation device 100 according to an embodiment may predict a shape of the tab within the battery cell before the battery cell is manufactured in a real environment, by providing the three-dimensional image.

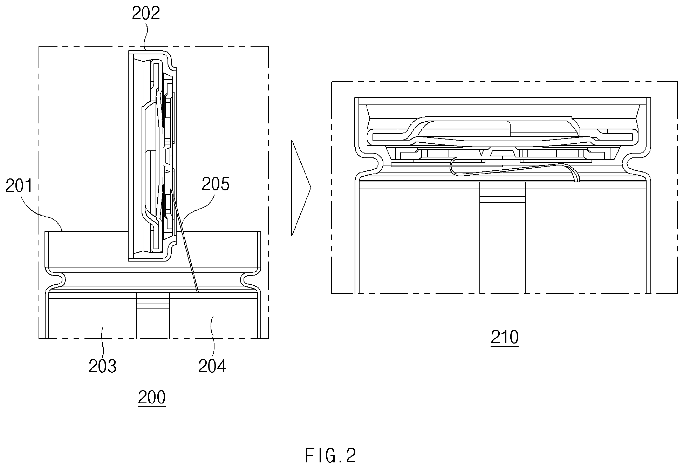

FIG. 2 illustrates an example of a simulation image acquired by a simulation device according to an embodiment disclosed herein. The simulation device 100 of FIG. 2 may correspond to the simulation device 100 of FIG. 1.

In an embodiment, a simulation image 200 may represent a cross-sectional view of a battery cell before a first portion 201 and a second portion 202 are coupled. The first portion 201 may represent a can of the battery cell including electrode assemblies 203 and 204 of the battery cell. The second portion 202 may represent a cap assembly of the battery cell. For example, the simulation device 100 may set an entire length of a tab 205 for connecting the first portion 201 to the second portion 202.

The simulation device 100 according to an embodiment may set the entire length of the tab 205, thereby enabling the first portion 201 and the second portion 202 to be coupled. For example, a simulation image 210 may represent a cross-sectional view of the battery cell in which the first portion 201 and the second portion 202 are coupled.

The simulation device 100 according to an embodiment as described above may provide a three-dimensional image (e.g., the simulation image 210) representing the battery cell in which the first portion 201 and the second portion 202 are coupled, by setting the entire length of the tab 205 in the virtual environment.

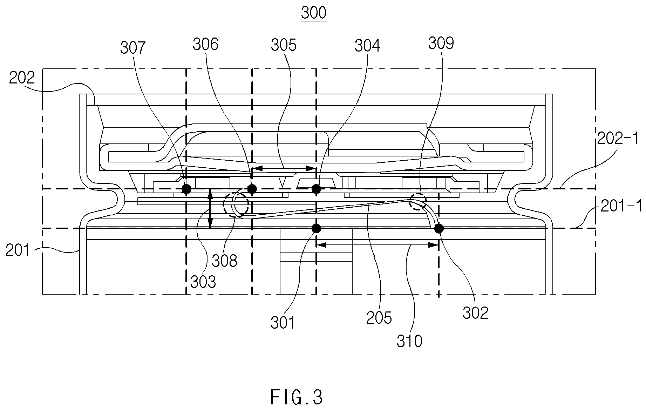

Hereinafter, with reference to FIG. 3, the operation of determining the length of the tab of the battery cell by using battery cell data by the simulation device 100 will be described in more detail below.

FIG. 3 illustrates an example of an operation of identifying an entire length of a tab by a simulation device according to an embodiment disclosed herein. The simulation device 100 of FIG. 3 may correspond to the simulation device 100 of FIG. 1.

In an example 300, the simulation device 100 according to an embodiment may identify a first length 310 from a first point 301 of a first surface 201-1 of a first portion 201 including an electrode of a battery cell to a second point 302 where a tab 205 protrudes onto the first surface 201-1.

For example, the first point may represent a center point of a jelly roll included in the first portion 201. The jelly roll may include a positive electrode of the battery cell, a negative electrode of the battery cell, and a separator of the battery cell.

The simulation device 100 according to an embodiment may identify a height 303 from the first surface 201-1 to the second portion 202 to be coupled with the first portion 201. The height 303 may include a length between the first surface 201-1 and the second surface 202-1.

The simulation device 100 according to an embodiment may identify a second length 305 from a third point where the tab 205 extending from the second point 302 protrudes onto the second surface 202-1 of the second portion 202 to a fourth point 304 on the second surface 202-1 where an end of the tab 205 is to be positioned.

The simulation device 100 according to an embodiment may identify an entire length of the tab 205 based on at least one of the first length 301, the height 303, the second length 305, or any combination thereof.

In an embodiment, the tab 205 may have at least one bent portion (e.g., 308 and 309). For example, there may be one or more bent portions. The bent portion may have a specified curvature.

The simulation device 100 according to an embodiment may determine the curvature at which at least a portion of the tab 205 connecting the first portion 201 to the second portion 202 is bent by using at least one of a first length 310, a height 303, the second length 305, or a combination thereof.

The simulation device 100 according to an embodiment may identify a sub-length corresponding to the curvature. The simulation device 100 may set the sub-length corresponding to the curvature depending on a degree to which at least a portion of the tab 205 is bent.

For example, the simulation device 100 may identify the entire length of the tab 205 using the sub-length.

The simulation device 100 according to an embodiment may identify the maximum length at which at least a portion of the tab 205 accesses a sub-portion of the second portion 202. For example, the sub-portion may include other components (e.g., a CID short circuit member) that are different from the tab 205.

For example, the maximum length may represent the length from a maximum point 307 to the fourth point 304. The maximum length may represent a distance at which the tab 205 is accessible to another part within the sub-portion. Since a defective battery cell may be obtained when the tab 205 accesses another part, the simulation device 100 may set the second length 305 shorter than the maximum length. For example, the simulation device 100 may identify the second length 305 less than the maximum length.

The simulation device 100 according to an embodiment may identify a minimum length for fixing the end of the tab 205 on the second surface 202-1. For example, the simulation device 100 may identify the second length 305 that exceeds the minimum length.

For example, the minimum length may represent a length for securing a minimum area to fix the end of the tab 205 on the second surface 202-1. The minimum length may represent a length between a fifth point 306 and the fourth point 304.

In other words, the simulation device 100 according to an embodiment may determine the degree to which at least a portion of the tab 205 is bent and/or the entire length of the tab 205 so that the length of the tab 205 protruding onto the second portion 202 (e.g., the second length 305) is between the minimum length and the maximum length.

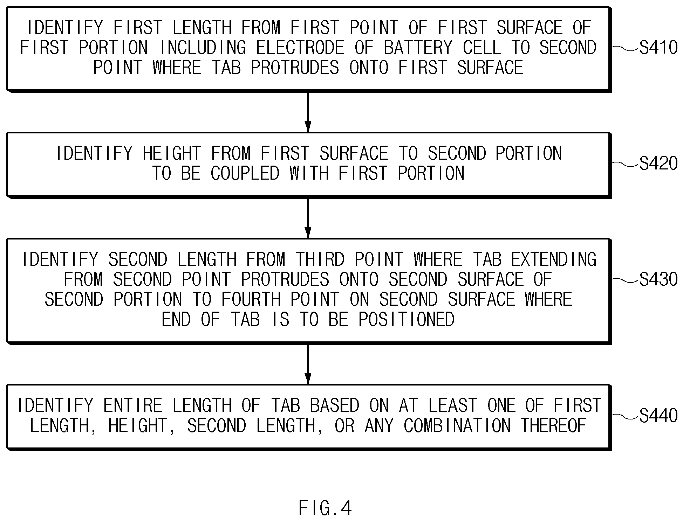

FIG. 4 is an exemplary flowchart showing operations of a simulation device according to an embodiment disclosed herein. Below, it is assumed that the simulation device 100 of FIG. 1 performs the process of FIG. 4. In addition, the operations described as being performed by the device may be understood to be controlled by the processor 110 of the simulation device 100. Each of the operations in FIG. 4 may be performed sequentially, but are not necessarily performed sequentially. For example, the order of the operations may be changed, and at least two operations may be performed in parallel.

In operation S410, the simulation device according to an embodiment may identify a first length (e.g., the first length 310 in FIG. 3) from a first point (e.g., the first point 301 in FIG. 3) of a first surface (e.g., the first surface 201-1 in FIG. 3) of a first portion (e.g., the first portion 201 in FIG. 2) including an electrode of a battery cell to a second point (e.g., the second point 302 in FIG. 3) where a tab protrudes onto the first surface.

For example, the simulation device may identify the sizes of parts included within the battery cell by identifying data about the battery cell in a virtual environment. For example, the simulation device may identify the first length based on the size it has identified.

In operation S420, the simulation device according to an embodiment may identify a height (e.g., the height 303 in FIG. 3) from the first surface to a second portion (e.g., second portion 202 in FIG. 2) to be coupled with the first portion.

For example, the simulation device may measure the height after coupling the first portion with the second portion in the virtual environment (or a simulation environment). That is, after coupling the first portion with the second portions, the simulation device may determine an entire length of the tab for connecting the first portion to the second portion.

In operation S430, the simulation device according to an embodiment may identify a second length (e.g., the second length 305 in FIG. 3) from a third point where the tab extending from the second point protrudes onto a second surface of the second portion (e.g., the second surface 202-1 in FIG. 3) to a fourth point (e.g., the fourth point 304 in FIG. 4) on the second surface where an end of the tab (e.g., the tab 205 in FIG. 2) is to be positioned.

For example, the simulation device may set the second length greater than the minimum length and less than the maximum length to secure an area for coupling (or welding) the tab to the second portion.

In operation S440, the simulation device according to an embodiment may identify the entire length of the tab based on at least one of the first length, the height, the second length, or any combination thereof.

For example, the simulation device may obtain a three-dimensional-based simulation image (e.g., the simulation image 210 in FIG. 2) by identifying the entire length of the tab. For example, the simulation device may transmit battery data corresponding to the simulation image to an external device for coupling the first portion with the second portion in a real environment. However, the simulation device is not limited thereto.

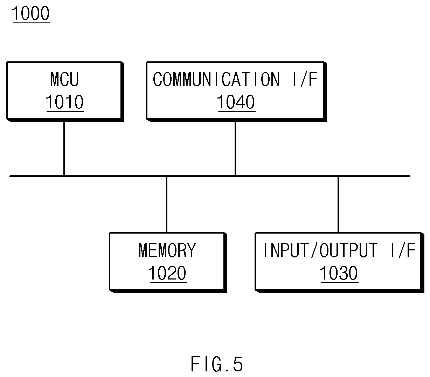

For example, the first portion and the second portion may be coupled in the real environment based on the simulation image obtained by the simulation device in the virtual environment, thereby enabling the battery cell to be obtained. For example, the simulation device may set the entire length of the tab using the simulation image, thereby enabling the first portion and the second portion to be coupled to obtain the battery cell. FIG. 5 shows a computing system that executes a simulation method according to an embodiment disclosed herein.

Referring to FIG. 5, a computing system 1100 according to an embodiment disclosed herein may include a microcontroller unit (MCU) 1010, a memory 1020, a communication I/F 1030, and an input/output interface (I/F) 1040.

The MCU 1010 may be a processor that executes various programs stored in the memory 1020, processes various types of information including data and the like of the battery through the programs, and performs functions of the processor 110 (or the controller) included in the simulation device 100 shown in the aforementioned FIG. 1.

The memory 1020 may store various programs for performing the functions of the power management device. In addition, the memory 1020 may store various types of information including battery data (voltage data, capacity data, and the like), differential capacity data, and the like, and may include a constructed database.

A plurality of memories 1020 may be provided as needed. The memory 1020 may be a volatile memory or a non-volatile memory. As the volatile memory, the memory 1020 may be a random-access memory (RAM), a dynamic RAM (DRAM), a static RAM (SRAM), or the like. For the memory 1020 as the non-volatile memory, a read-only memory (ROM), a programmable ROM (PROM), an electrically alterable ROM (EAROM), an erasable programmable ROM (EPROM), an electrically erasable programmable ROM (EEPROM,) a flash memory, or the like may be used. The examples of memories 1020 listed above are only exemplary and are not limited to the examples.

The input/output I/F 1030 may provide an interface that connects an input device (not shown) such as a keyboard, mouse, touch panel, or the like, and an output device such as a display (not shown), to the MCU 1010 to enable data transmission and reception.

The communication I/F 1040 is a component that may transmit and receive various data to and from the server, and may be any device that may support wired or wireless communication. For example, the power management device may transmit and receive various types of information, including battery data, to and from a separately provided external server or the like through the communication I/F 1040.

A computer program according to an embodiment disclosed herein may be recorded in the memory 1020 and processed by the MCU 1010, and thereby may be implemented as a module that performs each of the functions shown in FIG. 2, for example.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. A simulation device comprising:
an interface configured to acquire data related to a battery cell; and
at least one processor,
wherein the at least one processor is configured to:
identify a first length from a first point on a first surface of a first portion including an electrode of the battery cell to a second point where a tab protrudes onto the first surface;
identify a height from the first surface to a second portion to be coupled with the first portion;
identify a second length from a third point where the tab extending from the second point protrudes onto a second surface of the second portion to a fourth point on the second surface where an end of the tab is to be positioned; and
identify an entire length of the tab based on at least one of the first length, the height, the second length, or any combination thereof.

2. The simulation device of claim 1, wherein the at least one processor is configured to determine a curvature at which at least a portion of the tab connecting the first portion to the second portion is bent by using at least one of the first length, the height, the second length, or any combination thereof.

3. The simulation device of claim 2, wherein the at least one processor is configured to:
identify a sub-length corresponding to the curvature; and
identify the entire length of the tab using the sub-length.

4. The simulation device of claim 1, wherein the at least one processor is configured to:
identify a maximum length at which at least a portion of the tab accesses a sub-portion of the second portion; and
identify a second length less than the maximum length.

5. The simulation device of claim 4, wherein the maximum length represents a distance at which the tab is accessible to another part within the sub-portion.

6. The simulation device of claim 1, wherein the at least one processor is configured to:
identify a minimum length for fixing the end of the tab on the second surface; and
identify the second length that exceeds the minimum length.

7. The simulation device of claim 1, wherein the first point represents a center point of an electrode assembly included in the first portion.

8. The simulation device of claim 7, wherein the electrode assembly includes a positive electrode of the battery cell, a negative electrode of the battery cell, and a separator of the battery cell.

9. A simulation method comprising:
identifying a first length from a first point on a first surface of a first portion including an electrode of a battery cell to a second point where a tab protrudes onto the first surface;
identifying a height from the first surface to a second portion to be coupled with the first portion;
identifying a second length from a third point where the tab extending from the second point protrudes onto a second surface of the second portion to a fourth point on the second surface where an end of the tab is to be positioned; and
identifying an entire length of the tab based on at least one of the first length, the height, the second length, or any combination thereof.

10. The simulation method of claim 9, wherein the identifying of the entire length of the tab includes determining a curvature at which at least a portion of the tab connecting the first portion to the second portion is bent by using at least one of the first length, the height, the second length, or any combination thereof.

11. The simulation method of claim 10, wherein the identifying of the entire length of the tab further includes:
identifying a sub-length corresponding to the curvature; and
identifying the entire length of the tab using the sub-length.

12. The simulation method of claim 9, wherein the identifying of the second length further includes:
identifying a maximum length at which at least a portion of the tab accesses a sub-portion of the second portion; and
identifying a second length less than the maximum length.

13. The simulation method of claim 12, wherein the maximum length represents a distance at which the tab is accessible to another part within the sub-portion.

14. The simulation method of claim 9, wherein the identifying of the second length further includes:
identifying a minimum length for fixing the end of the tab on the second surface; and
identifying the second length that exceeds the minimum length.

15. The simulation method of claim 9, wherein the first point represents a center point of an electrode assembly included in the first portion.
